# EUROPÄISCHE PATENTSCHRIFT

(11) **EP 1 967 580 B1**
(45) Veröffentlichungstag und Bekanntmachung des Hinweises auf die Patenterteilung: **16.11.2011**
(21) Anmeldenummer: 07004460.7
(22) Anmeldetag: 05.03.2007
(51) Int. Cl.: C12H 1/16, B01D 29/05, B01D 29/52, B01D 29/64, B01D 29/72, B01D 29/90, B01D 29/94

(54) **Bierfilter**
Beer filter
Filtre à bière

(43) Veröffentlichungstag der Anmeldung: 10.09.2008
(73) Patentinhaber: KRONES Aktiengesellschaft, 93073 Neutraubling (DE)
(72) Erfinder: Wasmuth, Klaus, 91792 Ellingen (DE); Stumpe, Cornelia, 93047 Regensburg (DE); Stippler, Kurt, Dr., 85417 Marzling (DE); Albrecht, Thomas, 92339 Beilngries (DE); Humele, Heinz, 93107 Thalmassing (DE); Stein, Michael Thomas, 85368 Moosburg (DE)
(74) Vertreter: Grünecker, Kinkeldey, Stockmair & Schwanhäusser

(56) Entgegenhaltungen:
- EP-A- 1 138 364
- EP-A2- 0 204 098
- AU-B2- 440 841
- DE-A1- 2 753 864
- DE-A1- 3 924 658
- US-A- 4 137 756

## Beschreibung

Die vorliegende Erfindung betrifft eine Filtervorrichtung, insbesondere zur Bierfiltration, sowie ein entsprechendes Verfahren.

Aus der Druckschrift EP 1138364 A ist bereits ein Verfahren und eine Vorrichtung zur dynamischen Filtration bekannt. Die Filtervorrichtung ist ein Laborfilter mit einem Radius von 35 mm und einer Höhe von 5 mm und weist mehrere tangential ausgebildete Zuläufe, sowie einen Boden im Unfiltratraum auf, der als Filter ausgebildet ist. Eine Drainageschicht ist unterhalb des Filters angeordnet, wobei die Drainageschicht aus porösem Material besteht. Ferner weist diese Druckschrift einen Konzentratstromaustritt auf, sowie einen Filtratablauf.

Aus der Druckschrift DE 3924658 A1 ist bereits eine Kläranlage bekannt, wobei mehrere Schmutzwasserkammern vorgesehen sind, die über Filtermembranen, die vertikal angeordnet sind, von Klanivasserkammern getrennt sind. Während des Filtriervorgangs wird die Filtrierfläche in Bewegung versetzt und/oder in der zu filtrierenden Flüssigkeit eine Strömung erzeugt, die tangential zur Filterfläche gerichtet ist und eine Geschwindigkeitskomponente von mindestens 0,1 m/s aufweist. Hierzu ist beispielsweise eine Vibrationsvorrichtung vorgesehen. Aus der DE 2753864 A1 ist ein Druckfiltrationsgerät bekannt mit einem tangentialen Zulauf, wobei das Retenat senkrecht nach oben aus der Druckzelle herausgedrückt wird. Das Permeat wird über einen Ablauf nach unten abgeleitet. Die einzelnen Komponenten des Filters werden über eine Schraubzwinge zusammengehalten.

Bei der Bierherstellung ist es nötig, die im Bier enthaltenen Hefezellen und andere Feststoffe zu entfernen. Derartige Stoffe müssen abgeschieden werden, damit sie sich mit der Zeit nicht selbst ausscheiden und das Bier trüben. Da die Hefe eine Teilchengröße von etwa 5 bis 10 µm aufweist, ist es notwendig sogen. Mikrofilter zu verwenden, die z.B. in einem Bereich von 10⁻¹ bis 10⁻² µm arbeiten. Bislang wird das Bier hauptsächlich über Anschwemmfilter, z.B. mit Hilfe von Filterkerzen gefiltert. Bei derartigen Anschwemmfiltern wird bislang hauptsächlich Kieselgur als Filterhilfsmittel verwendet. Aufgrund der Toxizität von Kieselgur sowie der Entsorgungsproblematik wird nach Alternativen für diese Technik gesucht. Eine Alternative bieten beispielsweise Crossflow-Filtermodule, die jedoch nur eine geringe Filterkapazität aufweisen und zudem sehr schnell zusetzen.

Hiervon ausgehend liegt der vorliegenden Erfindung die Aufgabe zugrunde, eine verbesserte Filtervorrichtung, insbesondere zur Bierfiltration sowie ein entsprechendes Verfahren bereitzustellen, mit dem auf einfache und effiziente sowie umweltschonende Art und Weise Bier gefiltert werden kann.

Erfindungsgemäß wird diese Aufgabe durch die Merkmale der Ansprüche 1 und 19 gelöst.

Dadurch, dass das zu filtrierende Unfiltrat tangential zur Wandung des Unfiltratraumes in den Unfiltratraum eingebracht wird, kann sich ringförmig entlang der Wandung eine rotierende Strömung ausbilden, die den Inhalt des Unfiltratraumes über den Boden der zumindest teilweise als Filter ausgebildet ist rotieren lässt. Zur Mitte hin verlangsamt sich diese Strömung, so dass das Unfiltrat dort über den Unfiltratablauf den Unfiltratraum wieder verlassen kann, wodurch der Unfiltratraum kontinuierlich durchströmt wird.

Das mit Druck, vorzugsweise über eine Pumpe tangential zugeführte Unfiltrat wird zu einer, ähnlich wie bei einem Hydrozyklon, abwärtsgerichteten schraubenförmigen Umlaufströmung gezwungen. Durch die Drosselwirkung im unteren Teil des Unfiltratraumes werden von dem Außenwirbel ständig Teile zu einer inneren aufwärtsgerichteten Wirbelströmung umgelenkt. Das Unfiltrat, das über den Boden strömt, tritt durch den Filter oder die Filterabschnitte durch, wird somit gefiltert und kann dann die Filtervorrichtung verlassen.

Durch die Zentrifugalkraft im Unfiltratraum sammeln sich größere und schwerere Partikel an den Innenwänden des Unfiltratraumes und sacken nach unten zur Mitte des Bodens. Die Mikrofiltration erfolgt dann über den Filter bzw. die Filterabschnitte die in dem Boden der Unfiltratkammer ausgebildet sind. Somit ergibt sich eine kompakte Filterbauart, die eine einfache und effiziente Filtration ermöglicht. Für Grob- und Feinfiltration ist also nur eine Filtervorrichtung notwendig.

Dabei ist der Unfiltratablauf im Wesentlichen in der Mitte der Oberseite des Unfiltratraumes angeordnet, da hier das Unfiltrat aufgrund des Innenwirbels nach oben steigt.

Der Unfiltratablauf umfasst ein Ablaufrohr dessen Querschnittsfläche nach oben abnimmt. Durch die Verjüngung des Querschnitts des Ablaufrohres wird die Fliessgeschwindigkeit des Unfiltrats nach oben erhöht, wodurch das Unfiltrat in effizienter Weise abgezogen werden kann.

Vorteilhafterweise ist die Filterscheibe eine Mikrofilterscheibe, die Teilchen in einem Bereich > 10⁻¹ bis 10² µm, insbesondere in einem Bereich > 0,2 bis 1,8 µm ausfiltert. Somit kann der erfindungsgemäße Filter zuverlässig Hefen und Feststoffe ausfiltern.

Vorzugsweise ist der Mikrofilter als Mikrofilterscheibe ausgebildet und vorzugsweise aus einer mittels Laser perforierten Scheibe bzw. Blech gebildet. Ein solches Blech, weist ausreichende Stabilität auf, kann einfach gefertigt werden und ermöglicht Porengrößen im µm-Bereich bei gleichzeitig großen freien Siebflächen.

Ein solcher Filter kann entweder freitragend ausgebildet werden oder auf einem Träger aufliegen, wobei der Träger als Stützgewebe insbesondere als Metallgewebe oder als sich dreidimensional erstreckendes grobmaschiges Gitter ausgebildet sein kann, wobei die Gitteröffnungen des Trägers wesentlich größer sind als die Porengröße des Filters, um einen optimalen Durchfluss und Stabilität zu gewährleisten.

Der Durchmesser des Unfiltratraums kann nach unten abnehmen, oder aber der Boden des Unfiltratraums kann bombiert sein. Auch der Durchmesser des Filtratraumes kann nach unten abnehmen oder der Boden bombiert sein.

Zusammen können Unfiltrat und Filtratraum eine im Wesentlichen "wok"-artige Form bilden. Nimmt der Durchmesser des Filtratraumes leicht nach unten ab, so kommt es zu einer Drosselwirkung der umlaufenden Strömung, die die Aufwärtsströmung in der Mitte des Unfiltratraumes begünstigt.

In vorteilhafter Weise ist der Unfiltratablauf mit einer Rückführleitung verbunden, die das Unfiltrat im Kreislauf zurück in den Filtratraum und/oder in einen Puffer-/Vorratstank führt.

Somit kann das Unfiltrat, das aus dem Unfiltratraum abgeführt wird, erneut der Filtration zugeführt werden, wobei ein kontinuierliches Überströmen über den Boden, d. h. über den Filter möglich ist.

Gemäß einer bevorzugten Ausführungsform weist der Filtratablauf eine Ringleitung auf, die über mehrere Öffnungen mit dem Filtratraum verbunden ist. Somit ist ein gleichmäßiges Abführen des Filtrats möglich.

Ferner weist die Filtervorrichtung eine Einrichtung auf, die den Boden vorzugsweise pulsartig in Schwingung versetzt. Der Boden bzw. der Filter können entweder während des ganzen Filtervorgangs oder aber intervallweise in Schwingung versetzt werden. Durch die Anregung kann ein Zusetzen der Poren des Filters bzw. der Oberfläche des Filters verhindert werden.

In Vorteilhafterweise weist die Filtervorrichtung zu Reinigungszwecken auf dem Boden des Unfiltratraums eine beweglich umlaufende Bürste auf. Somit kann verhindert werden, dass sich die Oberfläche des Filters ganz zusetzt. Mit der Bürste können auch Ablagerungen gelockert werden, die dann über einen Rückspülvorgang durch den Unfiltratablauf entfernt werden können. Die Bürste kann durch einen an der Außenseite laufenden Magneten, wie etwa bei einem Aquarium, bewegt werden, oder durch eine Antriebswelle. Die Bürste kann auch durch einen Magneten, wie eine Magnetschwebebahn angetrieben werden.

Gemäß einer bevorzugten Ausführungsform ist in dem Boden des Unfiltratraums mindestens eine Öffnung ausgebildet, in der eine entsprechende Filterscheibe angeordnet ist. Ein solcher Filterboden ist sehr einfach zu fertigen, wobei auch mehrere kleine Filterscheiben in den Boden integriert werden können. Insbesondere dann, wenn der Boden nicht eben ausgebildet ist, ist es vorteilhaft mehrere Filterscheiben mit kleinerer Abmessung in dem Boden anzuordnen. Ein so ausgebildeter Boden weist auch eine größere Stabilität auf. Es können dann auch Filtermaterialien verwendet werden, die nicht großflächig gefertigt werden können.

Gemäß einer weiteren bevorzugten Ausführungsform ist der Filtratraum unterhalb des Unfiltratraums angeordnet und erstreckt sich auch seitlich um den Unfiltratraum herum. Eine solche Anordnung ist besonders platzsparend und kompakt da hier der Unfiltratraum mehr oder weniger im Filtratraum angeordnet werden kann.

In vorteilhafter Weise sind die Wandungen des Unfiltratraums zumindest teilweise als Faltenbalg ausgebildet. Dies bringt den Vorteil mit sich, dass Schwingungen, die von der Einrichtung erzeugt werden, die den Boden des Unfiltratraums in Schwingung versetzen, absorbiert werden können.

Die Einrichtung, die den Boden des Unfiltratraums in Schwingung versetzt, kann bevorzugterweise eine Rüttelwelle umfassen, die in einer Hülse durch den Filtratraum läuft und auf den Boden stößt. Dabei kann die Hülse an einem Ende an der Wandung oder dem Bode des Unfiltratraums und am anderen Ende an der Wandung oder dem Boden des Filtratraums angeordnet sein und zumindest abschnittsweise als Faltenbalg ausgebildet sein. Diese Lösung ermöglich, dass die Rüttelwelle den Boden des Unfiltratraums in Schwingung versetzen kann, ohne mit der Flüssigkeit im Unfiltratraum in Berührung zu kommen. Schwingungen werden dabei in effizienter Weise von dem Faltenbalg in der Hülse absorbiert.

Es ist vorteilhaft, wenn sowohl das Ablaufrohr als auch der Unfiltratzulauf höhenverstellbar angeordnet sind. Somit können die Höhe des Ablaufrohrs sowie die Höhe des Unfiltratzulaufs an einen entsprechenden Filterprozess angepasst werden.

Vorteilhafterweise ist im Filtratablauf ein Druckregelventil angeordnet, so dass der Druck im Filtratraum eingestellt werden kann.

Vorzugsweise werden der Druck im Filtratraum und Unfiltratraum oberhalb des Sättungsdampfdrucks von CO₂ gehalten, damit das CO₂ nicht ausgast. Dabei ist der Druck derart einzustellen, dass der Druck im Unfiltratraum größer ist als der Druck im Filtratraum, damit das Unfiltrat durch den Filter durchtreten kann. Damit sich eine ausreichende rotierende Strömung ausbilden kann, wird das Unfiltrat vorzugsweise mit einer Geschwindigkeit von 1 bis 10 m/s tangential eingeleitet, wobei in einer Zuführleitung Geschwindigkeiten bis etwas 6 m/s herrschen und direkt am Einlass in den Unfiltratraum Geschwindigkeiten bis etwas 10 m/s auftreten.

Es ist vorteilhaft, ein Filtersystem mit mehreren Filtervorrichtungen bereitzustellen, die in Reihe oder parallel zueinander angeordnet sind, um die Filterkapazität zu erhöhen.

Die vorliegende Erfindung wird nachfolgend unter Bezugnahme der folgenden Figuren näher erläutert:
- Figur 1: zeigt eine schematische Schnittdarstellung einer ersten Ausführungsform der vorliegenden Erfindung.
- Figur 2a: zeigt eine Aufsicht auf eine Filterscheibe.
- Figur 2b: zeigt den vergrößerten Bereich A der Figur 2a.
- Figur 2c: zeigt einen vergrößerten Teilschnitt entlang der Linie I-I in Figur 2a.
- Figur 3: zeigt eine weitere Ausführungsform der vorliegenden Erfindung.
- Figur 4: zeigt ein Filtersystem mit mehreren übereinander angeordneten Filtern.
- Figur 5: zeigt ein Filtersystem mit mehreren nebeneinander angeordneten Filtern.
- Figur 6: zeigt eine Einrichtung zum Reinigen der Filterscheibe.
- Figur 7: zeigt eine zweite Ausführungsform gemäß der vorliegenden Erfindung in perspektivischer Darstellung.
- Figur 8: zeigt eine Aufsicht auf das Ausführungsbeispiel der Figur 7.
- Figur 9: zeigt einen Schnitt entlang der Linie A-A in Figur 8.
- Figur 10: zeigt einen Schnitt entlang der Linie B-B der Figur 8.
- Figur 11 a: zeigt einen vergrößerten Ausschnitt eines Filters 4.

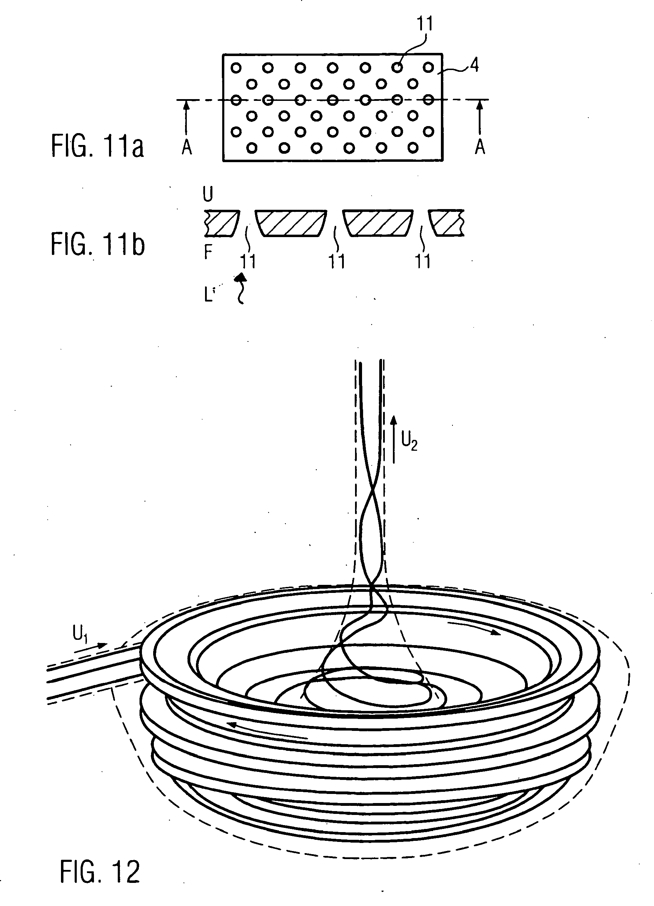

- Figur 11 b: zeigt einen vergrößerten Ausschnitt eines Schnitts entlang der Linie A-A in Figur 11a.
- Figur 12: zeigt schematisch den Strömungsverlauf in dem Unfiltratraum gemäß der vorliegenden Erfindung.

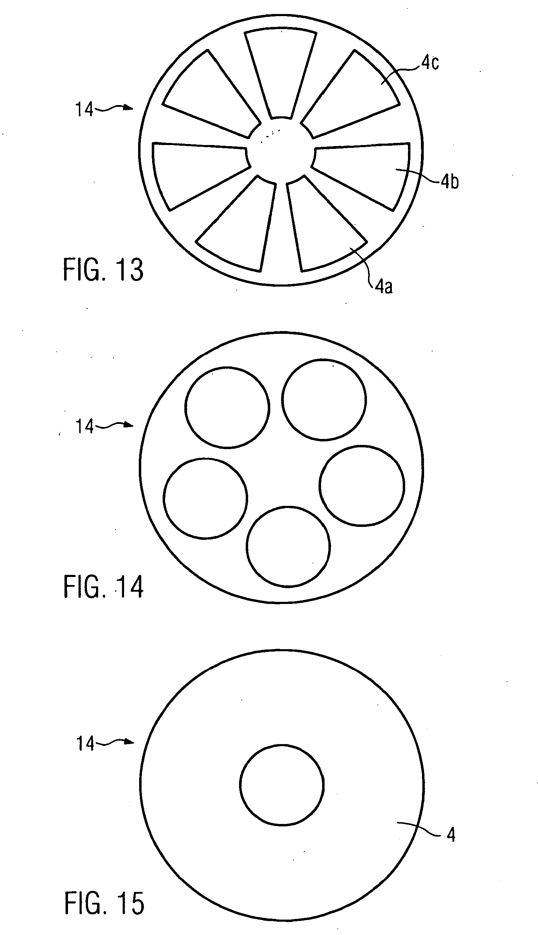

- Figur 13: zeigt eine Aufsicht auf den Boden des Unfiltratraums, der mehrere Filterscheiben umfasst.
- Figur 14: zeigt eine Aufsicht auf eine weitere Ausführungsform eines Bodens des Unfiltratraums gemäß der vorliegenden Erfindung.
- Figur 15: zeigt eine Aufsicht einer weiteren Ausführungsform eines Bodens des Unfiltratraums gemäß der vorliegenden Erfindung.

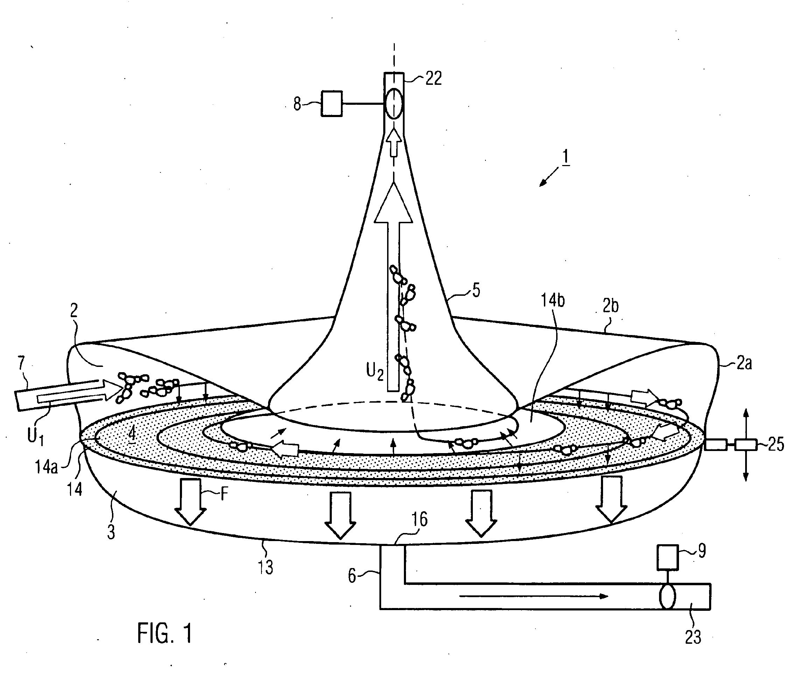

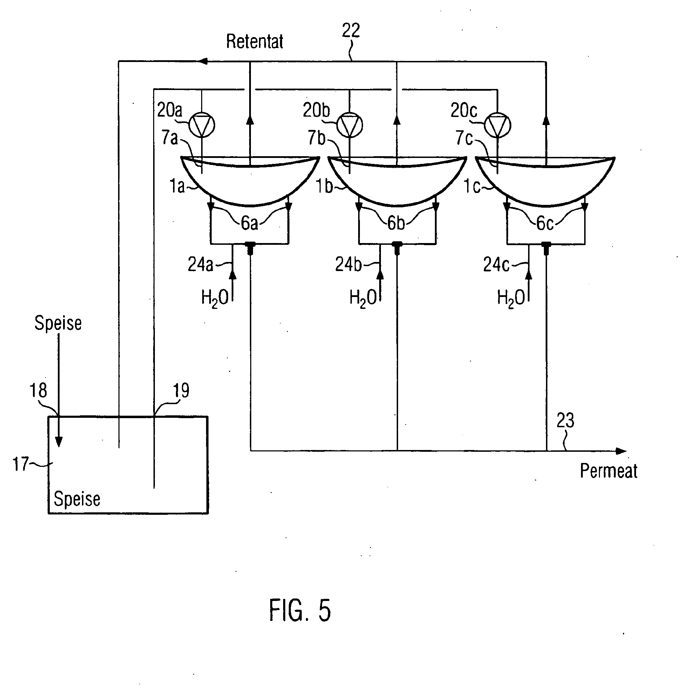

Figur 1 zeigt in schematischer Darstellung einen Querschnitt durch eine Filtervorrichtung 1 gemäß der vorliegenden Erfindung, die das Prinzip der Erfindung verdeutlichen soll. Der Filter 1 umfasst eine Unfiltratkammer 2, in die Unfiltrat über einen Unfiltratzulauf 7 z.B. aus einem Puffer-/Vorratstank 17 mit Hilfe einer Pumpe 20 (s. z.B. Figur 5) gepumpt wird. Der Zulauf 7 ist derart ausgestaltet, dass die Flüssigkeit im Wesentlichen tangential zur seitlichen Wandlung 2a des Unfiltratraumes 2 einströmt. Dabei kann beispielsweise ein Einlaufrohr im Wesentlichen tangential zur Wandung 2a verlaufen, oder aber beispielsweise an der Innenseite der Wandung 2a ein Einlaufelement (nicht dargestellt) vorgesehen sein, das den Unfiltratstrom so umlenkt, dass die Wandung 2a im Wesentlichen tangential angeströmt wird, derart dass sich, vergleichbar wie bei einem Hydrozyklon, eine rotierende Umlaufströmung ergibt. Es wird hier nicht näher auf den tangentialen Zulauf eingegangen, da solche Zuläufe insbesondere im Zusammenhang mit Whirlpools und Hydrozyklonen bekannt sind. Wesentlich beim Aufbau des Unfiltratzulaufs ist lediglich, dass die Innenwand der Unfiltratkammer derart angeströmt wird, dass sich ringförmig entlang der Wandung eine Strömung ausbildet, die den Inhalt des Unfiltratraumes rotieren lässt. Es ist auch möglich den Zulauf derart zu gestalten, dass das eintretende Filtrat in Richtung der Höhe aufgefächert wird. Hier weist dann der Zulauf z.B. ein Zulaufelement mit mehreren übereinander angeordneten Öffnungen oder einen Schlitz auf.

Der Unfiltratraum weist eine runde Querschnittsfläche auf, wobei hier der Durchmesser des Unfiltratraumes größer ist als seine Höhe. Der Boden des Unfiltratraumes 2 ist zumindest teilweise als Filter 4 ausgebildet und umfasst hier die Filterscheibe 4. Der Boden 14 trennt in der Filtervorrichtung 1 den Unfiltratraum 2 vom Filtratraum 3, der unter dem Boden 14, hier der Filterscheibe 4, angeordnet ist.

Der Unfiltratraum 2 weist weiter einen Unfiltratablauf 5 auf, der an der Oberseite 2b des Unfiltratraumes 2 ansetzt. Dabei ist der Unfiltratablauf 5 in der Mitte der Oberseite 2b angeordnet. Der Unfiltratablauf 5 ist als Ablaufrohr ausgebildet, dessen Querschnittsfläche sich von der Oberseite 2b des Unfiltratraumes nach oben verkleinert. Der Unfiltratablauf 5 mündet in eine Leitung 22, in der ein Stellventil 8 angeordnet ist, so dass der Durchfluss des Unfiltrats, sowie der Druck im Unfiltratraum eingestellt oder geregelt werden kann. Bei diesem Ausführungsbeispiel nimmt der Durchmesser der Unfiltratkammer nach unten, d.h. in Richtung Filterscheibe 4 ab. Auch der Durchmesser des Filtratraumes 3 nimmt nach unten hin ab. Unfiltratraum 2 und Filtratraum 3 können so zusammen, beispielsweise eine "wok"-artige Form aufweisen.

Der Filtratraum 3 weist mindestens einen Filtratablauf 6 auf, der über mindestens eine Öffnung 16 mit dem Filtratraum 3 verbunden ist, um das Filtrat über eine Filtratableitung 23 abzuleiten. Auch in der Filtratableitung 23 ist ein Stellventil 9 vorgesehen, um den Durchfluss des Filtrats einzustellen, wodurch der Druck im Filtratraum einstellbar bzw. regelbar ist.

Bei dieser Ausführungsform nimmt die Höhe des Unfiltratraumes von der Außenwandung 2a zum Unfiltratablauf 5 hin ab.

Die Filterscheibe 4 ist vorzugsweise eine Mikrofilterscheibe, die Teilchen einer Größe > 10⁻¹ bis 10² µm, vorteilhafterweise Teilchen einer Größe > 0,2 bis 1,8 µm ausfiltert.

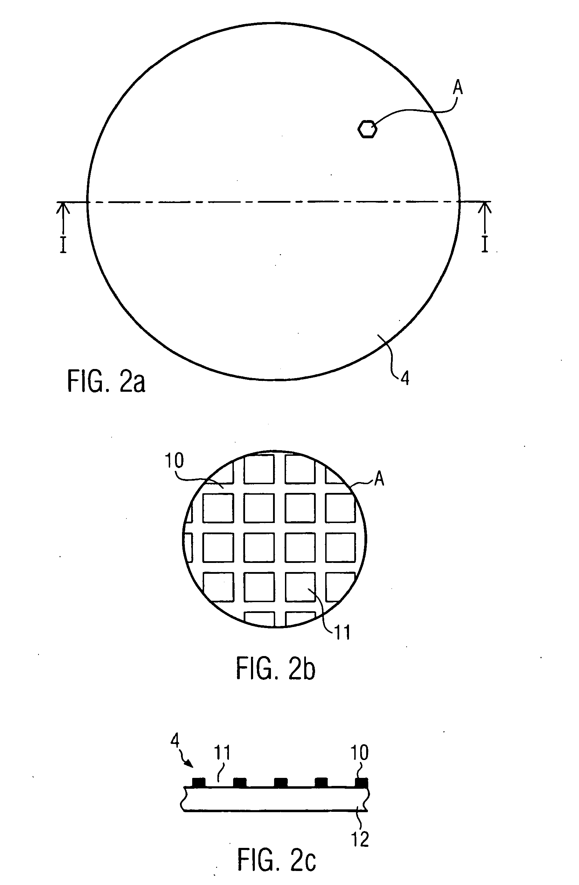

Es ist möglich, dass die Mikrofilterscheibe ein fotolithographisch erzeugtes Gitter 10 umfasst, wie insbesondere aus den Figuren 2a, b, c hervorgeht.

Figur 2a zeigt eine Aufsicht auf die kreisrunde Filterscheibe 4, wobei die Figur 2b eine Vergrößerung des Ausschnitts A zeigt. Wie deutlich aus Figur 2b zu erkennen ist, weist das Gitter 10 Poren 11 auf, durch die das Unfiltrat tritt und dabei gefiltert wird. Figur 2c zeigt einen vergrößerten Ausschnitt eines Schnitts entlang der Linie I-I in Figur 2a. Dabei wird deutlich, dass das Gitter 10 auf einem Träger, d.h. einer Trägerscheibe 12 aufgebracht ist, die eine größere Dicke als das fotolithografisch erzeugte Gitter 10 aufweist. Der Träger 12 bzw. die Trägerscheibe 12 ist beispielsweise als Stützgewebe, insbesondere Metallgewebe ausgebildet. Es kann auch als sich dreidimensional erstreckendes grobmaschiges Gitter ausgebildet sein, dessen Gittergröße größer als die des Gitters 10 ist, so dass das Filtrat gut durchtreten kann. Der Träger 12 verleiht dem fotolithografisch erzeugten Gitter 10 ausreichende Stabilität.

Gemäß einer besondere bevorzugten Ausführungsform ist die Mikrofilterscheibe aus einer mittels Laser perforierten Scheibe bzw. Platte gebildet, wie insbesondere aus den Figuren 11a und 11b hervorgeht. Die Filterscheibe 4 weist Poren 11 mit einer Lochweite in einem Bereich von beispielsweise 0,2 - 1,8 µm auf. Eine solche Lochweite ist beispielsweise für die Bierfiltration geeignet. Zum Filtern von Tensiden und Sporen sollte die Lochweite in einem Bereich ≤ 0,01 µm liegen. Die Poren 11 werden mittels Laser erzeugt. Als Filterscheibenmaterial eignet sich dafür beispielsweise ein 0,3 - 1 mm starkes CrNi-Stahlblech oder aber eine entsprechend dicke Teflonscheibe. Diese Materialien sind CIP/SIP-fähig, was insbesondere bei der Bierbrauerei bzw. auch in der Pharmaindustrie notwendig ist. Wie insbesondere aus Figur 11b hervorgeht, die einen vergrößerten Teilschnitt entlang der Linie A-A in Figur 11a darstellt, weisen die Poren 11 herstellungsbedingt auf der Oberseite einen geringeren Querschnitt auf als an der unteren Seite. Dabei entspricht die untere Seite der Seite, von der aus die Poren mittels Laser erzeugt werden, wie durch den Pfeil L dargestellt ist. Die oben angegebene Lochweite bezieht sich auf die kleinere Lochweite an der Oberseite. Die Filterscheibe 4 wird in der Filtervorrichtung derart angeordnet, dass die Seite der Poren 11 mit dem kleineren Durchmesser dem Unfiltratraum und die Seite mit dem größeren Porendurchmesser dem Unfiltratraum zugewandt ist. Eine solche Anordnung ermöglicht, dass die Poren weniger schnell zusetzen.

Die Filterscheibe 4, die wie in Zusammenhang mit Figuren 11 a und 11 b erläutert wurde, mittels Laser perforiert wurde, kann entweder selbsttragend ausgebildet werden oder ebenfalls wie die zuvor beschriebene fotolithographisch erzeugte Filterscheibe 4 auf einem entsprechenden Träger 12 angeordnet sein.

Die Filterscheibe 4 kann wie in Figur 2a dargestellt ist, sich über den ganzen Boden 14 des Unfiltratraums erstrecken. Es ist jedoch auch möglich, den Filterboden 14 nur teilweise als Filter auszubilden. Wie beispielsweise aus der Figur 15 hervorgeht, kann nur ein äußerer Ring des Bodens 14 als Filter 4 bzw. Filterscheibe 4 ausgebildet sein. Der mittlere Bereich, der im Wesentlichen unter dem Unfiltratablauf liegt ist nicht als Filter ausgebildet und weist einen im Wesentlichen für das Unfiltrat undurchlässigen Abschnitt auf. Wie aus den Figuren 13 und 14 hervor geht, können in dem Boden 14 des Unfiltratraums 2 mehrere Öffnungen vorgesehen sein, in die entsprechende Filterscheiben 4a, b, c ... 4n eingesetzt werden. Die Filterscheiben können dabei wie aus Figur 14 hervorgeht rund sein, aber jedoch auch eine beliebige andere, z. B. ovale oder mehreckige Form aufweisen wie beispielsweise aus Figur 13 hervorgeht. Dabei sind die Verbindungsstellen zwischen Boden 14 und Filterscheiben 4a - 4n abgedichtet.

Um das Zusetzen der Filterscheibe 4 zu verhindern, umfasst der erfindungsgemäße Filter 1 eine Einrichtung 25, die die Filterscheibe 4 in Schwingung versetzt. Vorzugsweise versetzt die Einrichtung 25 die Filterscheibe 4 pulsartig in Schwingung. Eine solche Einrichtung kann beispielsweise einen Schwingkopf umfassen, der an der Außenwandung des Filters, vorzugsweise auf Höhe der Filterscheibe 4 angeordnet ist, und der die Schwingungen auf die Filterscheibe 4 überträgt. Der erfindungsgemäße Filter 1 kann auch einen mechanischen Rüttler umfassen, der pulsartig direkt oder indirekt gegen den Boden bzw. Filter 4 stößt. Somit kann auf effiziente Art und Weise Fouling in den Poren/Kanälen und an der Oberfläche der Mikrosiebe verhindert werden. Dabei kann der Filter während der gesamten Filtration in Schwingung versetzt werden, oder aber intervallweise.

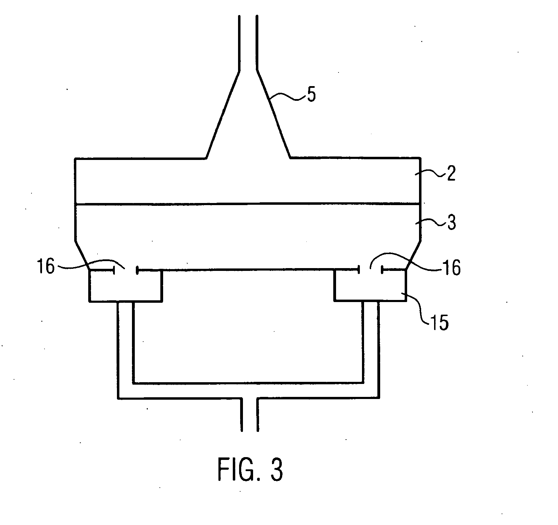

Figur 3 zeigt eine weitere Ausführungsform der vorliegenden Erfindung, bei der der Ablauf 6 eine Ringleitung 15 umfasst, die über mehrere Öffnungen 16 mit dem Filtratraum 3 verbunden ist. Hier ist die Ringleitung 16 unten an dem Filtratraum 3 angeordnet. Sie kann jedoch auch seitlich an den Unfiltratraum 3 angrenzen oder seitlich und unten an dem Unfiltratraum angrenzend, angeordnet sein. Die Ringleitung 15 weist dann jedoch vorzugsweise mehrere Öffnungen auf, über die das Filtrat in die Filtratableitung 23 geleitet wird.

Nachfolgend wird das Funktionsprinzip des erfindungsgemäßen Filters näher erläutert. Wie durch den Pfeil U1 in der Figur 1 dargestellt, wird Unfiltrat aus einem Puffer-/Vorratstank 17 über eine Leitung 19 (s. z. B. Figur 5) im Wesentlichen tangential über den Unfiltratzulauf 7 zugeführt, so dass die Seitenwandung 2a des Unfiltratraums 2 tangential mit dem Unfiltrat angeströmt wird. Das Unfiltrat wird durch eine Pumpe 20 (s. Figur 5) mit hoher Geschwindigkeit von etwa 1 - 10 m/s, eingepumpt. Das Unfiltrat wird, wie durch die Pfeile dargestellt ist, an der Innenwandung des Unfiltratraumes 2 zu einer äußeren ringförmigen abwärts gerichteten Umlaufströmung (im Bereich 14a), die den Inhalt des Unfiltratraumes über den Boden 14, hier die die Filterscheibe 4 rotieren lässt, gezwungen. Dabei nimmt zur Mitte des Unfiltratraumes die Strömungsgeschwindigkeit inklusive seiner Beladung ab. Durch eine Drosselwirkung im unteren Teil werden von der Außenströmung, d.h. dem Außenwirbel, ständig Teile zu einer innen aufwärtsgerichteten Wirbelströmung U2 umgelenkt. Der Bereich 14b, in dem es zu einer Aufwärtsströmung kommt ist in Fig. 1 als weiße Fläche dargestellt. Somit kann das Unfiltrat im mittleren Bereich des Unfiltratraumes 2 den Unfiltratraum 2 über den Unfiltratablauf 5 verlassen. Die Abnahme des Querschnitts des Unfiltratablaufs 5 begünstigt den Abzug. Der Strömungsverlauf ist noch besser aus der Fig. 12 zu erkennen.

Durch die Zentrifugalkraft sammeln sich größere und schwerere Partikel des Unfiltrats an der Innenwand 2a des Unfiltratraumes. Der abgezogene Unfiltratstrom U2 ist jedoch auch noch mit Partikeln beladen und kann über eine Rückführleitung 22 erneut im Kreislauf dem Unfiltratraum 2 oder einem Puffer-/Vorratsbehälter zugeführt werden. Die Geschwindigkeit des Unfiltratablaufs 2 und der Druck im Unfiltratraum kann über ein Stellventil 8 eingestellt werden. Das Unfiltrat, das im Unfiltratraum 4 über den Boden 14 rotiert, dringt quer zum Boden durch die Filterscheibe 4 (bzw. Filterscheiben 4a, b, c ..n) nach unten, wie durch die Pfeile F dargestellt ist. Das Unfiltrat wird somit durch die Filterscheibe filtriert.

Somit addieren sich bei der Filtration in vorteilhafter Weise zwei Effekte, nämlich die Zentrifugaltrennung sowie die Mikrofiltration durch den Filter 4. Das Filtrat im Filtratraum 3 kann über einen entsprechenden Filtratablauf 6 einer Filtratableitung 23 zugeführt werden. Auch die Ablaufgeschwindigkeit des Filtrats sowie der Druck im Filtratraum 3 kann über das Stellventil 9 eingestellt werden.

Der Druck im Unfiltratraum 2 und im Filtratraum 3 wird derart eingestellt, dass er über dem Sättigungsdruck von CO₂ liegt, damit bei der Bierfiltration das CO₂ nicht ausgast. Der Druck in Unfiltratraum und Filtratraum wird über Unfiltratzulauf 7 sowie die Stellventile 8 und 9 derart eingestellt, dass der Druck im Unfiltratraum 2 größer ist als der Druck im Filtratraum 3.

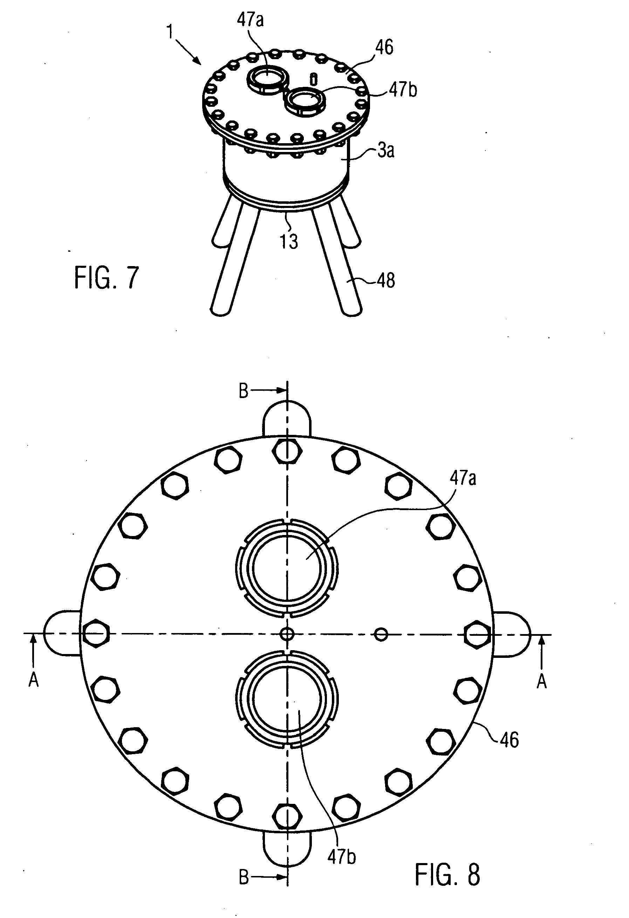

Figur 7 zeigt im perspektivischer Darstellung eine bevorzugte Ausführungsform der vorliegenden Erfindung. Die in Figur 7 ausgeführte Ausführungsform entspricht dabei im Wesentlichen der in den Figuren 1 bis 3 gezeigten Ausführungsform. Auch der Boden 14 des Unfiltratraums, so wie die Filterscheiben können wie in Zusammenhang mit den Figuren 2, 3, 11 1 und 13 - 15 beschrieben wurde ausgebildet sein. Auch das Funktionsprinzip der Ausführungsform der Figur 7 entspricht dem in Zusammenhang mit der Figur 1 erläuterten Funktionsprinzip.

Figur 7 zeigt die Außenwandung des im Wesentlichen hohlzylindrisch ausgebildeten Filtratraums 3, der hier einen bombierten Boden 13 aufweist. Der Boden 13 kann jedoch auch eben ausgebildet sein. Der Unfiltratraum 3 ist hier durch die Deckelplatte 46 nach oben druckdicht verschlossen. Die Deckelplatte 46 weist mindestens ein Schauglas 47a, b auf. Die Filtervorrichtung 1 umfasst hier mehrere Standbeine 48.

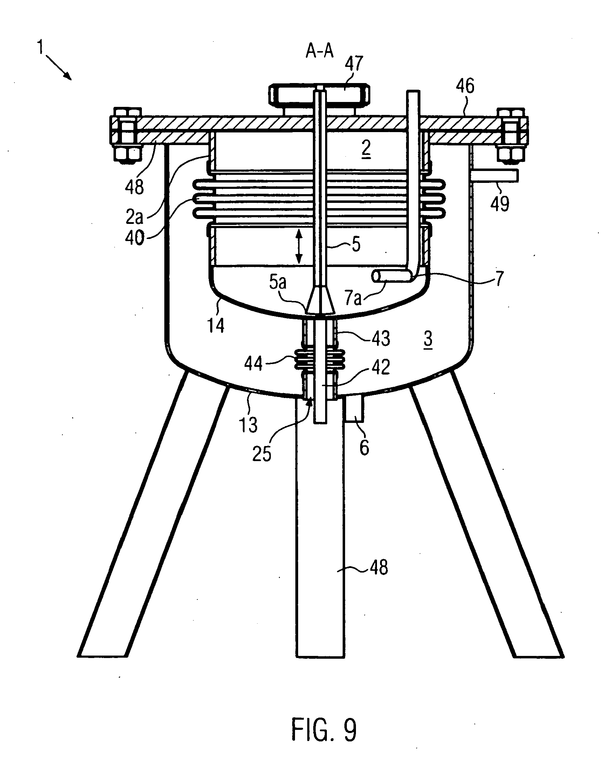

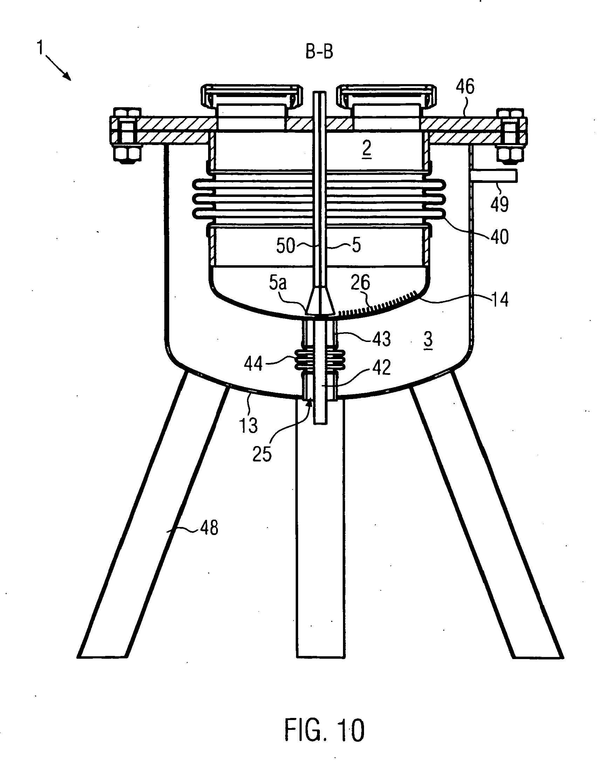

Figur 8 eine Aufsicht auf die in Figur 7 dargestellte Filtervorrichtung. Figur 9 ist ein Schnitt entlang der Linie A-A in Figur 8 und Figur 10 ist ein Schnitt entlang der Linie in Figur 8. Wie insbesondere aus den Figuren 9 und 10 hervorgeht, ist hier der Filtratraum 3 unterhalb und seitlich um den Unfiltratraum 2 angeordnet. Die Wandungen 2a des Unfiltratraums 2 werden ebenfalls durch die Deckelplatte 46 nach oben hin druckdicht verschlossen. Der Unfiltratraum 2 wird über die Halterungen 48, die mit der Wandung 2a des Unfiltratraums 2 verbunden sind im Filtratraum 3 gehalten. Der Boden 14 des Unfiltratraums 2 ist ebenfalls bombiert, kann aber auch eben ausgebildet sein.

Wie aus Figur 9 und 10 hervorgeht, erstreckt sich von der Oberseite der Filtervorrichtung 1 aus der Unfiltratablauf 5 in den Unfiltratraum 2. Der Unfiltratablauf 5 ist hier als Ablaufrohr ausgebildet, dass wie ebenfalls in Zusammenhang mit Figur 1 beschrieben wurde zumindest im unteren Bereich einen sich nach oben verjüngenden Querschnitt aufweist. Vorzugsweise ist das Rohr 5 das den Unfiltratablauf bildet höhenverstellbar angeordnet, so dass die Unterkante 5a des Ablaufrohrs einen variablen Abstand zum Boden 14 aufweist. Der sich nach oben verjüngende Abschnitt des Ablaufrohrs 5 kann austauschbar angeordnet sein, wobei Abschnitte mit unterschiedlichem Öffnungswinkel angebracht werden können. Der Zulauf 7 erfolgt hier ebenfalls wie im Zusammenhang mit Figur 1 beschrieben tangential, das heißt, dass das Unfiltrat derart angeströmt wird, dass es zu der ringförmigen Umlaufströmung kommt. Hier umfasst der Zulauf 7 ein Einlaufrohr, das von oben in den Unfiltratraum 2 eingeführt ist, und das ein Einlaufelement 7a aufweist, das an der Wandung 2a anliegt und das Unfiltrat an die Wandung 2a anströmt. Auch der Zulauf 7 kann höhenverstellbar angeordnet sein. Durch die Höhenverstellbarkeit des Zulaufs 7, sowie des Unfiltratablaufs 5, können Zu- und Ablauf des Unfiltrats auf unterschiedliche Prozesse eingestellt werden.

Die Filtervorrichtung weist darüber hinaus einen im Boden 13 des Filtratraums 3 angeordneten Filtratablauf 6 auf. Mit 49 ist eine Entlüftung des Filtratraums bezeichnet. Die Entlüftung kann über ein nicht dargestelltes Ventil geöffnet oder geschlossen werden.

Auch diese Filtervorrichtung 1 weist eine Einrichtung 25 auf, die den Boden 14 des Unfiltratraums in Schwingungen versetzt. Die Einrichtung 25 umfasst dabei die Rüttelwelle 42, die an den Boden 14 angrenzt und diesen vibrieren lässt. Die Rüttelwelle 42 läuft durch die Hülse bzw. das Rohr 43. Die Hülse 43 ist an einem Ende am Boden des Unfiltratraums 2 und am anderen Ende am Boden des Filtratraums 3 angeordnet. Somit kann die Rüttelwelle 25 den Boden 14 erreichen ohne durch das Filtrat durchzutreten. Die Hülse 43 ist dabei zumindest teilweise als Faltenbalg 44 ausgebildet, der die Schwingungen absorbiert. Somit werden die Schwingungen nicht oder nur geringfügig auf das Gehäuse des Filtratraums 3 übertragen. In gleicher Weise ist auch die Wandung 2a des Unfiltratraums 2 zumindest teilweise als Faltenbalg 40 ausgebildet, so dass die Schwingungen, des Bodens 14 nicht auf die Deckelplatte 46 und auf die Wandungen des Filtratraums 3 übertragen werden.

Bei diesem Ausführungsbeispiel ist zumindest der Bereich, der der Hülse 43 gegenüber liegt nicht als Filter ausgebildet, sondern für das Unfiltrat undurchlässig ausgebildet, so dass kein Filtrat in die Hülse 43 laufen kann. Das Funktionsprinzip des in Figur 7 gezeigten Filters entspricht dem in Zusammenhang in Figur 1 gezeigten Funktionsprinzip.

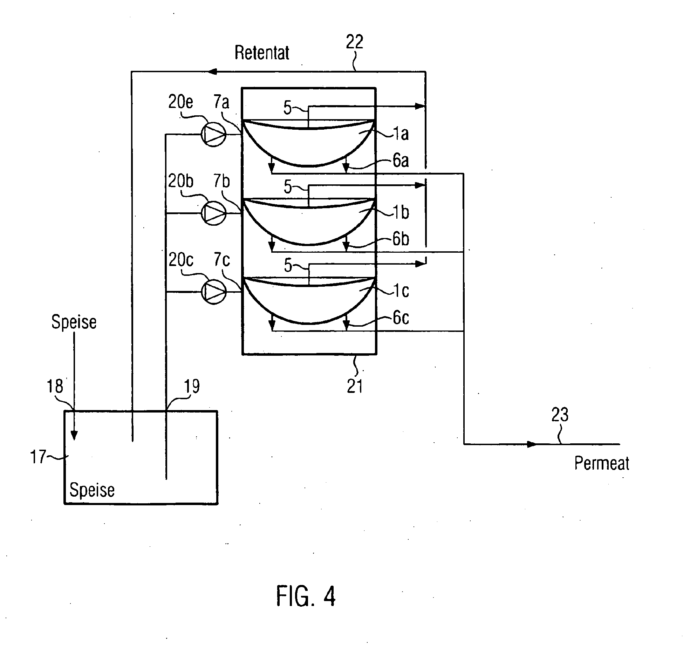

Um die Kapazität des Filters zu erhöhen, können, wie in Figur 4 dargestellt ist, mehrere Filtereinheiten 1 a, b, c zu einer Einheit 21 kombiniert werden. Dabei werden aus dem Vorratspuffertank 17 über eine Leitung 19 und entsprechende Pumpen 20a, b, c die einzelnen Filter 1 a, b, c gleichzeitig mit Unfiltrat gespeist. Das Unfiltrat, das über den Unfiltratablauf 5 jeweils abgeleitet wird, wird in eine gemeinsame Unfiltratrückführleitung 22 hier zurück in den Tank 17 geleitet, könnte aber ebenso gut sofort wieder in die entsprechenden Filter 1 a, b, c über die Pumpen 20a, b, c gepumpt werden. Auch die Filtratabläufe 6a, b, c münden in eine gemeinsame Filtratableitung 23. Der Puffer-/Vorratstank 17 wird über eine Leitung 18 mit Unfiltrat gespeist.

Figur 5 zeigt eine weitere Anordnung, die im Wesentlichen der Anordnung, die in Figur 4 gezeigt ist, entspricht, bei der jedoch die einzelnen Filter 1 a, b, c nebeneinander angeordnet sind. In Figur 5 ist noch eine Wasserrückspülleitung bzw. eine CIP-/SIP-Leitung (cleaing in place / sterilizing in place) 24a, b, c gezeigt, über die zu Reinigungszwecken, z. B. Wasser in den entsprechenden Filter 1 a, b, c gepumpt werden kann, so dass Ablagerungen auf der Filterscheibe 4 über den Unfiltratablauf 5 ausgeleitet werden können.

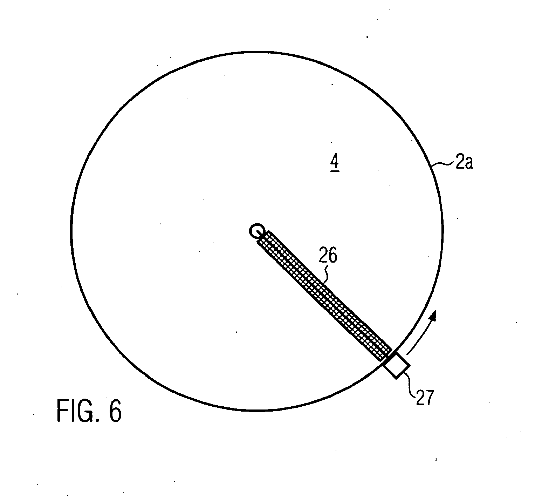

Figur 6 zeigt weiter eine Einrichtung zum Reinigen der Filteroberfläche 4. Dabei ist hier beispielsweise eine Bürste 26 auf der Filterscheibenoberfläche 8 beweglich angeordnet. Die Bürste 26 läuft über die Oberfläche des Filters 4. Bei dieser Ausführungsform umfasst die Bürste 26 insbesondere an dem der Unfiltratraumwandung 2a zugewandten Seite ein metallisches Material. Ein Magnet 27, der an der Außenfläche der Wandung 2a im Bereich der Filterscheibe angeordnet ist, wird umlaufend, wie durch den Pfeil dargestellt ist, bewegt. Der Magnet 27 bewegt somit, ähnlich wie in einem Aquarium oder einer Magnetschwebevorrichtung, die Bürste 26 von außen. Die Bürste löst die Verunreinigungen auf der Filterscheibe 4.

Die Bürste 26 kann beispielsweise auch in der Mitte der Filterscheibe 4 drehbar gelagert sein.

Bei dem in Figur 7 bis 10 gezeigten Ausführungsbeispiel kann, wie insbesondere aus Figur 10 hervorgeht, die Bürste 26 über eine Antriebswelle 50 umlaufend angetrieben werden. Die Antriebswelle 50 ist dabei mit einem nicht gezeigten Motor verbunden. Die Antriebswelle 50 läuft hier durch das Ablaufrohr 5. Die Bürste könnte aber ebenfalls über eine Antriebswelle angetrieben werden, die durch die Hülse 43 durch den Boden 14 läuft und die Bürste 26 von unten antreibt.

Der Unfiltratstrom, der über die Unfiltratableitung 5 abgezogen wird, kann über eine nicht dargestellte Pumpe unterstützt werden. Auch der Filtratablauf kann über eine nicht dargestellte Pumpe unterstützt werden. Filtratseitig kann mittels geeigneter Strömungserzeugung eine Umwälzung des Filtrats entlang der Unterseite des Bodens 14 erzeugt werden. Dies erbringt ein über die Siebfläche konstantes ausgeglichenes transmembranes Druckgefälle von der Unterseite her.

Gemäß der vorliegenden Erfindung werden zwei Effekte kombiniert, nämlich die eines Hydrozyklons, bei dem aufgrund der Zentrifugalkraft sehr große und schwere Bestandteile an die Wandung des Unfiltratraumes gedrückt werden, sowie der Effekt der Mikrofiltration durch die Filterscheibe(n) 4. Somit benötigt man gemäß der vorliegenden Erfindung keine Kombination aus Grobfilter und Feinfilter, sondern lediglich eine Filtereinheit.

Der vorliegende Filter bzw. das erfindungsgemäße vorliegende Filterverfahren wurde im Zusammenhang mit der Bierfiltration beschrieben. Ebenso geeignet ist dieser Filtertyp jedoch auch beispielsweise zur Filtration im Pharmabereich, wo z.B. Tenside und Sporen ausgefiltert werden sollen.

## Patentansprüche

1. Filtervorrichtung (1), insbesondere zur Bierfiltration, mit
einem Unfiltratraum (2), der einen Unfiltratzulauf (7) sowie einen Unfiltratablauf (5) aufweist, wobei der Unfiltratzulauf (7) derart ausgebildet ist, dass das Unfiltrat im wesentlichen tangential zur Wandung (2a) des Unfiltratraumes (2) angeströmt wird, und der Boden (14) des Unfiltratraumes (2) zumindest teilweise als Filter (4) ausgebildet ist und der Filter mindestens eine Filterscheibe umfasst, sowie mit einem Filtratraum (3), der unter dem Boden (14) angeordnet ist, und der einen Filtratablauf (6) umfasst, wobei der Unfiltratablauf (5) im wesentlichen in der Mitte der Oberseite (2b) des Unfiltratraumes (2) angeordnet ist **dadurch gekennzeichnet, dass** und wobei die Filtervorrichtung weiter eine Einrichtung (25) aufweist, die die Filterscheibe (4) in Schwingung versetzt.
der Unfiltratablauf (5) ein Ablaufrohr (5) umfasst, dessen Querschnittsfläche nach oben abnimmt,

2. Filtervorrichtung (1) nach Anspruch 1
**dadurch gekennzeichnet, dass**
der Filter (4) ein Mikrofilter ist, der Teilchen in einem Bereich > 10⁻¹ bis 10² µm, insbesondere in einem Bereich > 0,2 bis 1,8 µm ausfiltert.

3. Filtervorrichtung (1) nach Anspruch 2,
**dadurch gekennzeichnet, dass**
der Mikrofilter eine Microfilterscheibe ist, die vorzugsweise aus einer mittels Laser perforierten Scheibe gebildet ist.

4. Filtervorrichtung (1) nach mindestens einem der Ansprüche 2 oder 3,
**dadurch gekennzeichnet, dass**
der Filter (4) auf einem Träger (12) aufliegt, und der Träger (12) als Stützgewebe, insbesondere Metallgewebe oder als sich dreidimensional erstreckendes grobmaschiges Gitter ausgebildet ist.

5. Filtervorrichtung nach mindestens einem der Ansprüche 1 bis 4,
**dadurch gekennzeichnet, dass**
der Durchmesser des Unfiltratraums (2) nach unten abnimmt oder der Boden (14) des Unfiltratraums (2) bombiert ist.

6. Filtervorrichtung (1) nach mindestens einem der Ansprüche 1 bis 5,
**dadurch gekennzeichnet, dass**
der Durchmesser des Filtratraumes (3) nach unten abnimmt oder der Boden (13) des Filtratraums bombiert ist.

7. Filtervorrichtung nach mindestens einem der Ansprüche 1 bis 6,
**dadurch gekennzeichnet, dass**
der Unfiltratablauf (5) mit einer Rückführleitung (22) verbunden ist, die das Unfiltrat im Kreislauf zurück in den Unfiltratraum (2) und/oder in einen Puffer-Norrattank (17) führt.

8. Filtervorrichtung (1) nach mindestens einem der Ansprüche 1 bis 7,
**dadurch gekennzeichnet, dass**
der Filtratablauf (6) eine Ringleitung (15) umfasst, die über mehrere Öffnungen (16) mit dem Filtratraum (3) verbunden ist.

9. Filtervorrichtung (1) nach mindestens einem der Ansprüche 1 bis 8,
**dadurch gekennzeichnet, dass**
die Einrichtung (25) den Boden (14) des Unfiltratraums in Schwingung versetzt.

10. Filtervorrichtung (1) nach mindestens einem der Ansprüche 1 bis 9,
**dadurch gekennzeichnet, dass**
zu Reinigungszwecken auf dem Boden (14) eine bewegliche, umlaufende Bürste (26) angeordnet ist.

11. Filtervorrichtung (1) nach Anspruch 10,
**dadurch gekennzeichnet, dass**
die Bürste (26) durch einen an der Außenseite der Wandung (2a) des Unfiltratraumes (2) laufenden Magneten bewegt wird oder durch eine Antriebswelle (50).

12. Filtervorrichtung (1) nach mindestens einem der Ansprüche 1 bis 11,
**dadurch gekennzeichnet, dass**
in dem Boden (14) des Unfiltratraums (2) mindestens eine Öffnung ausgebildet ist, in der jeweils eine entsprechende Filterscheibe (4a, b, c) angeordnet ist.

13. Filtervorrichtung (1) nach mindestens einem der Ansprüche 1 bis 12,
**dadurch gekennzeichnet, dass**
sich der Filtratraum (3) unterhalb und seitlich um den unfiltratraum (2) erstreckt.

14. Filtervorrichtung (1) nach mindestens einem der Ansprüche 1 bis 13,
**dadurch gekennzeichnet, dass**
die Seitenwandung (2a) des Unfiltratraums (2) zumindest teilweise als Faltenbalg (40) ausgebildet ist.

15. Filtervorrichtung nach Anspruch 1,
**dadurch gekennzeichnet, dass**
die Einrichtung (25) eine Rüttelwelle (42) umfasst, die in einer Hülse (43) durch den Filtratraum (3) läuft und den Boden (14) des Unfiltratraums in Schwingung versetzt.

16. Filtervorrichtung nach Anspruch 15,
**dadurch gekennzeichnet, dass**
die Hülse (43) an einem Ende an der Wandung oder dem Boden des Unfiltratraums und am anderen Ende an der Wandung oder dem Boden des Filtratraums angeordnet ist und zumindest abschnittsweise als Faltenbalg (44) ausgebildet ist.

17. Filtervorrichtung nach mindestens einem der Ansprüche 1 bis 16,
**dadurch gekennzeichnet, dass**
das Ablaufrohr (5) und/oder der Unfiltratzulauf (7) höhenverstellbar angeordnet sind.

18. Filtersystem mit mehreren Filtervorrichtungen nach mindestens einem der Ansprüche 1 bis 17,
**dadurch gekennzeichnet, dass**
mehrere Filtervorrichtungen (1) in Reihe oder parallel zueinander angeordnet sind.

19. Verfahren, insbesondere zur Filtration von Bier mit folgenden Schritten:
- tangentiales Einleiten von Unfiltrat in einen Unfiltratraum (2), derart, dass sich entlang der Wandung (2a) des Unfiltratraumes (2) eine rotierende Strömung ausbildet, die sich zur Mitte des Unfiltratraumes (2) verlangsamt, wodurch das Unfiltrat über den Boden des Unfiltratraumes (2), der zumindest teilweise als Filter (4),der mindestens eine Filterscheibe umfasst, ausgebildet ist, rotiert und nach unten durch den Filter (4) fließt und dabei gefiltert wird,
- Abführen des Filtrats unterhalb des Bodens (14) sowie
- Abführen von Unfiltrat aus der Mitte des Unfiltratraumes (2) über ein AbPLaufrohr (5), dessen Querschnittsfläche nache oben abnimmt, wobei während der Filtration der Filter (4) zumindest intervallweise in Schwingung versetzt wird.

20. Verfahren nach Anspruch 19,
**dadurch gekennzeichnet, dass**
der Filter (4) ein Mikrofilter ist, wobei Teilchen in einem Bereich >10⁻¹ bis 10² µm, insbesondere > 0,2 bis 1,8 µm ausgefiltert werden.

21. Verfahren nach Anspruch 19 oder 20,
**dadurch gekennzeichnet, dass**
das abgezogene Unfiltrat im Kreislauf zurück in den Unfiltratraum (2) und/oder einen Puffer-Norratstank (17) gebracht wird.

22. Verfahren nach Anspruch 19,
**dadurch gekennzeichnet, dass**
der Filter (4) pulsartig in Schwingung versetzt wird.

23. Verfahren nach mindestens einem der Ansprüche 19 bis 22,
**dadurch gekennzeichnet, dass**
zu Reinigungszwecken eine Bürste (26) auf der Oberfläche des Bodens (14) des Unfiltratraums umläuft.

24. Verfahren nach mindestens einem der Ansprüche 19 bis 23,
**dadurch gekennzeichnet, dass**
der Druck in dem Filtratraum (3) und dem Unfiltratraum (2) oberhalb des Sättigungsdrucks von CO₂ gehalten wird.

25. Verfahren nach mindestens einem der Ansprüche 19 bis 24,
**dadurch gekennzeichnet, dass**
der Druck im Unfiltratraum (2) größer gehalten wird, als der Druck im Filtratraum (3).

26. Verfahren nach mindestens einem der Ansprüche 19 bis 25,
**dadurch gekennzeichnet, dass**
das Unfiltrat mit einer Geschwindigkeit von 1 bis 10 m/s tangential eingeleitet wird.

27. Filtervorrichtung (1) nach mindestens einem der Ansprüche 1 bis 17,
**dadurch gekennzeichnet, dass**
im Filtratablauf (6) ein Druckregelventil (9) angeordnet ist.

## Claims

1. Filter device (1), in particular for the filtration of beer, comprising a nonfiltrate chamber (2), having a nonfiltrate inlet (7) and a nonfiltrate outlet (5), wherein the nonfiltrate inlet (7) is designed such that the nonfiltrate is conducted substantially tangentially to the wall (2a) of the nonfiltrate chamber (2), and the bottom (14) of the nonfiltrate chamber (2) is at least partially designed as a filter (4) and the filter comprises at least one filter disk, and having a filtrate chamber (3), which is arranged under the bottom (14), and which comprises a filtrate outlet (6), wherein the nonfiltrate outlet (5) is arranged substantially in the centre of the upper side (2b) of the nonfiltrate chamber (2), **characterised in that** the nonfiltrate outlet (5) comprises an outlet pipe (5), of which the cross-sectional area diminishes towards the top, the filter device also having a means (25), which vibrates the filter disk (4).

2. Filter device (1) according to claim 1, **characterised in that** the filter (4) is a microfilter that filters out particles within a range > 10⁻¹ to 10² µm, in particular within a range > 0.2 to 1.8 µm.

3. Filter device (1) according to claim 2 **characterised in that** the microfilter is a microfilter disk, which is formed preferably of a disk perforated by means of a laser.

4. Filter device (1) according to at least one of claims 2 or 3 **characterised in that** the filter (4) rests on a support (12), and the support (12) is designed as backing fabric, in particular metallic fabric or as three-dimensionally extending wide-meshed lattice.

5. Filter device according to at least one of claims 1 to 4, **characterised in that** the diameter of the nonfiltrate chamber (2) diminishes towards the bottom or the bottom (14) of the nonfiltrate chamber (2) is arched.

6. Filter device (1) according to at least one of claims 1 to 5 **characterised in that** the diameter of the filtrate chamber (3) diminishes towards the bottom or the bottom (13) of the filtrate chamber is arched.

7. Filter device according to at least one of claims 1 to 6, **characterised in that** the nonfiltrate outlet (5) is connected to a return pipe (22), which conducts the nonfiltrate in the cycle back to the nonfiltrate chamber (2) and/or to a buffer/feeder tank (17).

8. Filter device (1) according to at least one of claims 1 to 7, **characterised in that** the filtrate outlet (6) comprises a circular pipe (15), which is connected to the filtrate chamber (3) via a plurality of openings (16).

9. Filter device (1) according to at least one of claims 1 to 8, **characterised in that** the means (25) vibrates the bottom (14) of the nonfiltrate chamber.

10. Filter device (1) according to at least one of claims 1 to 9, **characterised in that** a movable circulating brush (26) is arranged on the bottom (14) for cleaning purposes.

11. Filter device (1) according to claim 10, **characterised in that** the brush (26) is moved by a magnet passing on the outside of the wall (2a) of the nonfiltrate chamber (2) or is moved by a drive shaft (50).

12. Filter device (1) according to at least one of claims 1 to 11, **characterised in that** at least one opening is designed in the bottom (14) of the nonfiltrate chamber (2), in which a corresponding filter disk (4a, b, c) is arranged.

13. Filter device (1) according to at least one of claims 1 to 12, **characterised in that** the filtrate chamber (3) extends underneath and laterally around the nonfiltrate chamber (2).

14. Filter device (1) according to at least one of claims 1 to 13; **characterised in that** the side wall (2a) of the nonfiltrate chamber (2) is at least partially designed as a bellow (40).

15. Filter device according to claim 1, **characterised in that** the means (25) comprises a vibrating shaft (42), extending in a sleeve (43) through the filtrate chamber (3) and vibrating the bottom (14) of the nonfiltrate chamber.

16. Filter device according to claim 15, **characterised in that** the sleeve (43) is arranged at one end on the wall or the bottom of the nonfiltrate chamber and at the other end on the wall or bottom of the filtrate chamber and is, at least in sections, designed as a bellow (44).

17. Filter device according to at least one of claims 1 to 16 **characterised in that** the outlet pipe (5) and/or the nonfiltrate inlet (7) are arranged to be height-adjustable.

18. Filter system with several filter devices according to at least one of claims 1 to 17, **characterised in that** a plurality of filter devices (1) are arranged in series or in parallel to each other.

19. Method, in particular for the filtration of beer including the following steps:
- tangentially introducing nonfiltrate into a nonfiltrate chamber (2), such that a rotating flow is formed along the wall (2a) of the nonfiltrate chamber (2), which slows down towards the centre of the nonfiltrate chamber (2), whereby the nonfiltrate rotates over the bottom of the nonfiltrate chamber (2), which is at least partially designed as filter (4), which comprises at least one filter disk, and flows downwards through the filter (4) and is filtered in the process,
- discharging of filtrate underneath the bottom (14) and
- discharging of nonfiltrate from the centre of the nonfiltrate chamber (2) via an outlet pipe (5), of which the cross-sectional area diminishes towards the top, wherein the filter (4) is vibrated at least at intervals during the filtration.

20. Method according to claim 19, **characterised in that** the filter (4) is a microfilter,
wherein particles within a range of >10⁻¹ to 10² µm, in particular > 0.2 to 1.8 µm, are filtered out.

21. Method according to claim 19 or 20, **characterised in that** the removed nonfiltrate is returned in the cycle back to the nonfiltrate chamber (2) and/or a buffer/feeder tank (17).

22. Method according to claim 19, **characterised in that** the filter (4) is vibrated in a pulsed manner.

23. Method according to at least one of claims 19 to 22, **characterised in that** a brush (26) circulates on the surface of the bottom (14) of the nonfiltrate chamber for cleaning purposes.

24. Method according to at least one of claims 19 to 23, **characterised in that** the pressure in the filtrate chamber (3) and the nonfiltrate chamber (2) is kept above the saturation pressure of CO₂.

25. Method according to at least one of claims 19 to 24, **characterised in that** the pressure in the nonfiltrate chamber (2) is kept higher than the pressure in the filtrate chamber (3).

26. Method according to at least one of claims 19 to 25, **characterised in that** the nonfiltrate is introduced tangentially at a speed of 1 to 10 m/s.

27. Filter device (1) according to at least one of claims 1 to 17, **characterised in that** a pressure control valve (9) is arranged in the filtrate outlet (6).

## Revendications

1. Dispositif filtrant (1), en particulier pour filtrer la bière, avec
un espace pour produit à filtrer (2) qui comporte une amenée de produit à filtrer (7) et une sortie de produit à filtrer (5), étant précisé que l'amenée (7) est conçue de telle sorte que le produit à filtrer arrive globalement tangentiellement par rapport à la paroi (2a) de l'espace pour produit à filtrer (2), que le fond (14) dudit espace (2) est conçu au moins en partie comme un filtre (4) et que le filtre comprend au moins une plaque filtrante, et avec
un espace pour filtrat (3) qui est disposé sous le fond (14) et qui comprend une sortie de filtrat (6), étant précisé que la sortie de produit à filtrer (5) est disposée globalement au milieu du côté supérieur (2b) de l'espace pour produit à filtrer (2), **caractérisé en ce que** la sortie de produit à filtrer (5) comprend un tuyau de sortie (5) dont la surface de section transversale va en diminuant vers le haut, étant précisé que le dispositif filtrant comporte par ailleurs un mécanisme (25) qui fait vibrer la plaque filtrante (4).

2. Dispositif filtrant (1) selon la revendication 1, **caractérisé en ce que** le filtre (4) est constitué par un microfiltre qui sépare les particules situées dans une plage >10⁻¹ à 10² µm, en particulier dans une plage >0,2 à 1,8 µm.

3. Dispositif filtrant (1) selon la revendication 2, **caractérisé en ce que** le microfiltre est constitué par une plaque microfiltrante qui se compose de préférence d'une plaque perforée au laser.

4. Dispositif filtrant (1) selon l'une au moins des revendications 2 ou 3, **caractérisé en ce que** le filtre (4) est posé sur un support (12) et le support (12) est conçu comme un tissu de support, en particulier comme un tissu métallique, ou comme une grille à grosses mailles qui s'étend en trois dimensions.

5. Dispositif filtrant (1) selon l'une des revendications 1 à 4, **caractérisé en ce que** le diamètre de l'espace pour produit à filtrer (2) va en diminuant vers le bas, ou le fond (14) de l'espace pour produit à filtrer (2) est bombé.

6. Dispositif filtrant (1) selon l'une au moins des revendications 1 à 5, **caractérisé en ce que** le diamètre de l'espace pour filtrat (3) va en diminuant vers le bas, ou le fond (13) de l'espace pour filtrat est bombé.

7. Dispositif filtrant selon l'une au moins des revendications 1 à 6, **caractérisé en ce que** la sortie de produit à filtrer (5) est reliée à une conduite de recyclage (22) qui remet le produit à filtrer en circulation dans l'espace pour produit à filtrer (2) et/ou dans une cuve d'attente/réservoir (17).

8. Dispositif filtrant (1) selon l'une au moins des revendications 1 à 7, **caractérisé en ce que** la sortie de filtrat (6) comprend une conduite circulaire (15) qui est reliée à l'espace pour filtrat (3) par plusieurs ouvertures (16).

9. Dispositif filtrant (1) selon l'une au moins des revendications 1 à 8, **caractérisé en ce que** le mécanisme (25) fait vibrer le fond (14) de l'espace pour produit à filtrer.

10. Dispositif filtrant (1) selon l'une au moins des revendications 1 à 9, **caractérisé en ce qu'**il est prévu sur le fond (14), à des fins de nettoyage, une brosse rotative mobile (26).

11. Dispositif filtrant (1) selon la revendication 10, **caractérisé en ce que** la brosse (26) est déplacée par un aimant qui tourne sur le côté extérieur de la paroi (2a) de l'espace pour produit à filtrer (2), ou par un arbre d'entraînement (50).

12. Dispositif filtrant (1) selon l'une au moins des revendications 1 à 11, **caractérisé en ce qu'**il est prévu dans le fond (14) de l'espace pour produit à filtrer (2) au moins une ouverture dans laquelle est disposée une plaque filtrante correspondante (4a, b, c).

13. Dispositif filtrant (1) selon l'une au moins des revendications 1 à 12, **caractérisé en ce que** l'espace pour filtrat (3) s'étend au-dessous et sur le côté de l'espace pour produit à filtrer (2).

14. Dispositif filtrant (1) selon l'une au moins des revendications 1 à 13, **caractérisé en ce que** la paroi latérale (2a) de l'espace pour produit à filtrer (2) est conçue au moins en partie comme un soufflet (40).

15. Dispositif filtrant (1) selon la revendication 1, **caractérisé en ce que** le mécanisme (25) comprend un arbre vibreur (42) qui tourne dans un manchon (43) traversant l'espace pour filtrat (3) et qui fait vibrer le fond (14) de l'espace pour produit à filtrer.

16. Dispositif filtrant (1) selon la revendication 15, **caractérisé en ce que** le manchon (43) est disposé, à une extrémité, sur la paroi ou sur le fond de l'espace pour produit à filtrer et, à l'autre extrémité, sur la paroi ou sur le fond de l'espace pour filtrat, et est conçu au moins par zones comme un soufflet (44).

17. Dispositif filtrant (1) selon l'une au moins des revendications 1 à 16, **caractérisé en ce que** le tuyau de sortie (5) et/ou l'amenée de produit à filtrer (7) sont disposés de manière à pouvoir être réglés en hauteur.

18. Système filtrant avec plusieurs dispositifs filtrants selon l'une au moins des revendications 1 à 17, **caractérisé en ce que** plusieurs dispositifs filtrants (1) sont disposés en ligne ou parallèlement.

19. Procédé, en particulier pour filtrer la bière, avec les étapes suivantes :
- introduction tangentielle du produit à filtrer dans un espace pour produit à filtrer (2), de telle sorte qu'il se forme le long de la paroi (2a) de l'espace pour produit à filtrer (2) un écoulement rotatif qui va en ralentissant vers le milieu de l'espace pour produit à filtrer (2), moyennant quoi le produit à filtrer tourne sur le fond dudit espace (2), conçu au moins en partie comme un filtre (4) qui comprend au moins une plaque filtrante, et s'écoule vers le bas à travers le filtre (4) en étant filtré,
- évacuation du filtrat au-dessous du fond (14) et
- évacuation du produit à filtrer hors du milieu de l'espace pour produit à filtrer (2), par un tuyau de sortie (5) dont la surface de section transversale va en diminuant vers le haut, étant précisé que pendant la filtration, on fait vibrer le filtre (4) au moins par intervalles.

20. Procédé selon la revendication 19, **caractérisé en ce que** le filtre (4) est constitué par un microfiltre, étant précisé que les particules situées dans une plage >10⁻¹ à 10² µm, en particulier dans une plage >0,2 à 1,8 µm, sont séparées.

21. Procédé selon la revendication 19 ou 20, **caractérisé en ce que** le produit à filtrer qui est extrait est remis en circulation dans l'espace pour produit à filtrer (2) et/ou dans une cuve d'attente/réservoir (17).

22. Procédé selon la revendication 19, **caractérisé en ce qu'**on fait vibrer le filtre (4) par impulsions.

23. Procédé selon l'une au moins des revendications 19 à 22, **caractérisé en ce que**, à des fins de nettoyage, une brosse (26) tourne sur la surface du fond (14) de l'espace pour produit à filtrer.

24. Procédé selon l'une au moins des revendications 19 à 23, **caractérisé en ce que** la pression dans l'espace pour filtrat (3) et dans l'espace pour produit à filtrer (2) est maintenue au-dessus de la pression de saturation de CO₂.

25. Procédé selon l'une au moins des revendications 19 à 24, **caractérisé en ce que** la pression dans l'espace pour produit à filtrer (2) est maintenue supérieure à la pression dans l'espace pour filtrat (3).

26. Procédé selon l'une au moins des revendications 19 à 25, **caractérisé en ce que** le produit à filtrer est introduit tangentiellement à une vitesse de 1 à 10 m/s.

27. Dispositif filtrant (1) selon l'une au moins des revendications 1 à 17, **caractérisé en ce qu'**il est prévu dans la sortie de filtrat (6) une soupape de régulation de pression (9).
